# EUROPÄISCHE PATENTANMELDUNG

(11) **EP 3 159 569 A2**
(43) Veröffentlichungstag der Anmeldung: **26.04.2017**
(21) Anmeldenummer: 16194657.9
(22) Anmeldetag: 19.10.2016
(51) Int. Cl.: F16D 23/06, F16D 11/14

(54) **SYNCHRONISIEREINRICHTUNG**

(30) Priorität: 23.10.2015 DE 102015220718
(71) Anmelder: Deere & Company, Moline, IL 61265 (US)
(72) Erfinder: Buhrke, Frank, 69488 Birkenau (DE)
(74) Vertreter: Dehnhardt, Florian Christopher

(57) **Zusammenfassung**

Synchronisiereinrichtung (10), insbesondere für ein Fahrzeuggetriebe, mit einem auf einer axialen Welle drehfest anbringbaren Synchronisierkörper (14) und einer mit dem Synchronisierkörper (14) drehfest verbundenen, entlang eines Außenumfangs des Synchronisierkörpers (14) axial verschiebbaren Schaltmuffe (16), die zur Ausführung eines Synchronisiervorgangs ausgehend von einer Neutralstellung (18) in einer ersten Schaltphase mit einem axial verlagerbaren Synchronisierring sowie in einer zweiten Schaltphase mit einem an den Synchronisierring angrenzenden Kupplungskörper drehfest in Eingriff bringbar ist, wobei der Synchronisierring während der ersten Schaltphase seitens der Schaltmuffe (16) mittels im Synchronisierkörper (14) axial verschiebbar angeordneter Druckstücke (30) in Richtung des angrenzenden Kupplungskörpers verlagerbar und damit zum Zwecke der Vorsynchronisierung mit dem angrenzenden Kupplungskörper in Reibschluss bringbar ist. Hierbei ist die Schaltmuffe (16) mittels einer in dem Synchronisierkörper (14) angeordneten Rasteinrichtung (46) derart arretiert, dass zum Verschieben der Schaltmuffe (16) aus der Neutralstellung (18) eine definierte Feststellkraft zu überwinden ist.

## Beschreibung

Die vorliegende Erfindung betrifft eine Synchronisiereinrichtung, wie sie beispielsweise in Fahrzeuggetrieben zur Umschaltung zwischen zwei Getriebegängen Verwendung findet. Die Synchronisiereinrichtung umfasst einen auf einer axialen Welle drehfest anbringbaren Gleichlauf- bzw. Synchronisierkörper sowie eine mit dem Synchronisierkörper drehfest verbundene, entlang eines Außenumfangs des Synchronisierkörpers axial verschiebbare Schaltmuffe, die zur Ausführung eines Synchronisiervorgangs ausgehend von einer Neutralstellung in einer ersten Schaltphase mit einem axial verlagerbaren Synchronisierring sowie in einer zweiten Schaltphase mit einem an den Synchronisierring angrenzenden Kupplungskörper drehfest in Eingriff bringbar ist, wobei der Synchronisierring während der ersten Schaltphase seitens der Schaltmuffe mittels im Synchronisierkörper axial verschiebbar angeordneter Druckstücke in Richtung des angrenzenden Kupplungskörpers verlagert und mit dem angrenzenden Kupplungskörper zum Zwecke der Vorsynchronisierung in Reibschluss bringbar ist.

Die axiale Verschiebung der Schaltmuffe erfolgt im Allgemeinen mittels einer fremdkraftbetätigten Schaltgabel, deren gabelförmiges Ende in eine an der Schaltmuffe umlaufende Betätigungsnut eingreift. Die Betätigung der Schaltgabel erfolgt mittels eines elektrischen, hydraulischen oder pneumatischen Aktuators. Da das gabelförmige Ende innerhalb der Betätigungsnut mit einem gewissen Schaltspiel gelagert ist, dieses liegt typischerweise in der Größenordnung von 1 bis 3 Millimetern, besteht die Möglichkeit, dass die Schaltmuffe aufgrund äußerer Krafteinflüsse aus ihrer mittigen Neutralstellung entlang des Synchronisierkörpers ausgelenkt wird und dabei den Synchronisierring in Kontakt mit dem angrenzenden Kupplungskörper bringt. Dies kann zu einem unerwünschten frühzeitigen Verschleiß der an dem Kupplungskörper bzw. Synchronisierring ausgebildeten Reibflächen führen.

Es ist daher Aufgabe, eine bezüglich ihrer Zuverlässigkeit bzw. Haltbarkeit verbesserte Synchronisiereinrichtung anzugeben.

Diese Aufgabe wird durch eine Synchronisiereinrichtung mit den Merkmalen des Patentanspruchs 1 gelöst.

Die insbesondere für ein Fahrzeuggetriebe vorgesehene Synchronisiereinrichtung umfasst einen auf einer axialen Welle drehfest anbringbaren Synchronisierkörper und eine mit dem Synchronisierkörper drehfest verbundene, entlang eines Außenumfangs des Synchronisierkörpers axial verschiebbare Schaltmuffe, die zur Ausführung eines Synchronisiervorgangs ausgehend von einer Neutralstellung in einer ersten Schaltphase mit einem axial verlagerbaren Synchronisierring sowie in einer zweiten Schaltphase mit einem an den Synchronisierring angrenzenden Kupplungskörper drehfest in Eingriff bringbar ist, wobei der Synchronisierring während der ersten Schaltphase seitens der Schaltmuffe mittels im Synchronisierkörper axial verschiebbar angeordneter Druckstücke in Richtung des angrenzenden Kupplungskörpers verlagerbar und zum Zwecke der Vorsynchronisierung mit dem angrenzenden Kupplungskörper in Reibschluss bringbar ist. Erfindungsgemäß ist die Schaltmuffe mittels einer in dem Synchronisierkörper angeordneten Rasteinrichtung derart arretiert, dass zum Verschieben der Schaltmuffe aus der Neutralstellung eine definierte Feststellkraft zu überwinden ist.

Auf diese Weise wird die Schaltmuffe unabhängig von einem zwischen dem gabelförmigen Ende der Schaltgabel und der Betätigungsnut der Schaltmuffe bestehenden Schaltspiel verlässlich in ihrer Neutralstellung zentriert, sodass eine durch äußere Krafteinflüsse bedingte Auslenkung der Schaltmuffe wie auch ein damit einhergehender unerwünschter Kontakt der Reibflächen von Synchronisierkörper und Synchronisierring sicher unterbunden wird.

Vorteilhafte Weiterbildungen der erfindungsgemäßen Synchronisiereinrichtung gehen aus den Unteransprüchen hervor.

Vorzugsweise weist die Rasteinrichtung eine Druckfeder sowie eine in der Neutralstellung in eine Ausnehmung der Schaltmuffe eingreifende Rastkugel auf, wobei die Druckfeder in einer nach außen hin geschlitzten Radialbohrung innerhalb des Synchronisierkörpers geführt ist. Die nach außen hin geschlitzte Ausbildung der Radialbohrung ermöglicht eine bessere Zugänglichkeit der Druckfeder bzw. der Rastkugel zum Zwecke des Zusammenbaus der Synchronisiereinrichtung. Die entlang eines Innenumfangs der Schaltmuffe vorgesehene Ausnehmung kann insbesondere eine konische oder zylindrische Form aufweisen, sodass die Rastkugel lediglich punktuell an deren Wandung anliegt. Dies führt zu einer besonders sicheren Arretierung der Rastkugel innerhalb der Ausnehmung.

Im Gegensatz zur Einbringung einer Vollbohrung, die lokal zu vergleichsweise geringen (und bei Durchführung eines Härteverfahrens problematischen) Wandstärken in den Stirnseiten des Synchronisierkörpers führen kann, lässt sich durch entsprechende Bemessung der Breite der Schlitzung eine dem verwendeten Härteverfahren angemessene Restwandstärke aufrechterhalten. Die Breite der Schlitzung ist insbesondere derart auf den Durchmesser der verwendeten Druckfeder abgestimmt, dass diese entlang eines Teilumfangs der Radialbohrung in dem Synchronisierkörper abgestützt und damit verlässlich in dieser geführt wird.

Im Hinblick auf eine gleichmäßige Verteilung der auf die Schaltmuffe bzw. den Synchronisierkörper ausgeübten Feststell- und Betätigungskräfte ist es möglich, dass entlang des Umfangs des Synchronisierkörpers insgesamt drei Rasteinrichtungen und drei Druckstücke abwechselnd mit einem gleichmäßigen Winkelabstand von 60 Grad verteilt angeordnet sind.

Die Druckstücke können über weitere Rasteinrichtungen mit der Schaltmuffe gekuppelt sein. Jede der weiteren Rasteinrichtungen umfasst ihrerseits eine Druckfeder sowie eine in eine Ausnehmung der Schaltmuffe eingreifende Rastkugel. Die weiteren Rasteinrichtungen übertragen eine an der Schaltmuffe auftretende Verschiebung auf die Druckstücke, und zwar derart, dass die Druckstücke der Bewegung der Schaltmuffe bis zum Erreichen eines vorgegebenen Schaltpunkts folgen, jedoch bei Überschreitung des vorgegebenen Schaltpunkts durch Überwindung der Kugelrastung ausgekuppelt werden.

Die Druckfedern erstrecken sich hierzu durch in den Druckstücken ausgebildete Radialbohrungen, wobei jede der Druckfedern mit einem radial inneren Ende in dem Synchronisierkörper gelagert ist und mit einem radial äußeren Ende an der Rastkugel anliegt und diese gegen die Schaltmuffe bzw. die entlang ihres Innenumfangs ausgebildete Ausnehmung presst.

Hierbei besteht die Möglichkeit, dass die Rasteinrichtungen wie auch die weiteren Rasteinrichtungen bezüglich ihrer Dimensionierung übereinstimmende Druckfedern und/oder Rastkugeln umfassen. Die Verwendung von Gleichteilen ist nicht nur kostengünstiger, sondern schließt einen fehlerhaften Zusammenbau der Synchronisiereinrichtung aufgrund von Teileverwechslungen von vornherein aus.

Die erfindungsgemäße Synchronisiereinrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine im Schnitt dargestellte Teilansicht eines Ausführungsbeispiels der erfindungsgemäßem Synchronisiereinrichtung für ein Fahrzeuggetriebe, und
- Fig. 2: eine Schnittansicht eines von der erfindungsgemäßem Synchronisiereinrichtung umfassten Synchronisierkörpers mit einer Schaltmuffe sowie mehreren Rasteinrichtungen.

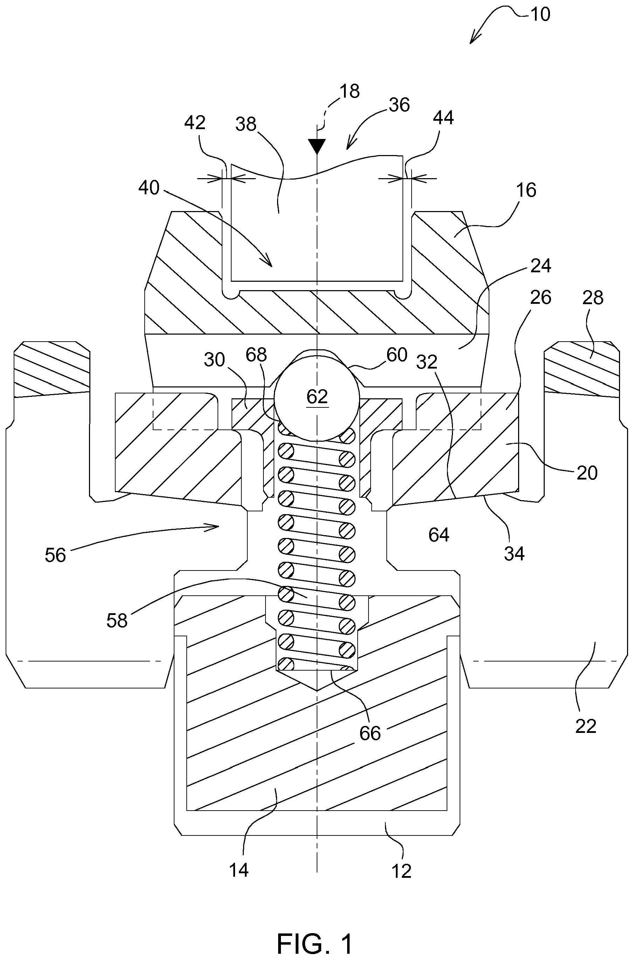

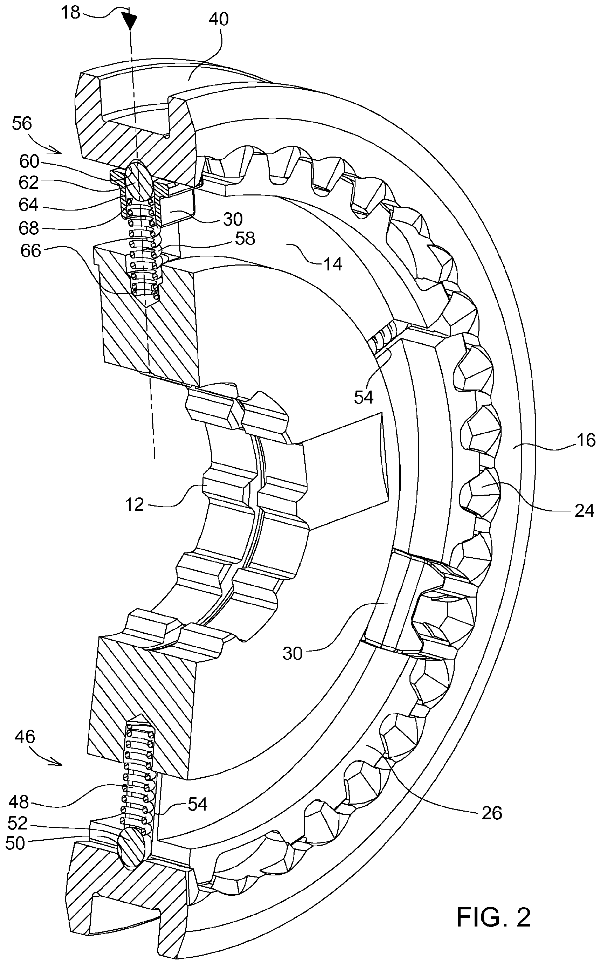

Fig. 1 und 2 zeigen verschiedene Schnittansichten eines Ausführungsbeispiels der erfindungsgemäßen Synchronisiereinrichtung.

Beispielsgemäß findet die Synchronisiereinrichtung 10 zur Umschaltung zwischen zwei Getriebegängen in einem nicht dargestellten Fahrzeuggetriebe Verwendung, wobei beim Einlegen der Getriebegänge zur Angleichung möglicher Drehzahlunterschiede der nachfolgend beschriebene Synchronisiervorgang ausgeführt wird. Der Einfachheit halber soll sich die Beschreibung des Synchronisiervorgangs auf lediglich einen der beiden Getriebegänge beschränken. Für den anderen Getriebegang gelten dann entsprechende Betrachtungen.

Die Synchronisiereinrichtung 10 umfasst einen auf einer axialen Welle (nicht dargestellt) mittels einer Verzahnung 12 drehfest angebrachten Gleichlauf- bzw. Synchronisierkörper 14 sowie eine mit dem Synchronisierkörper 14 drehfest verbundene, entlang eines Außenumfangs des Synchronisierkörpers 14 axial verschiebbare Schaltmuffe 16, die zur Ausführung des Synchronisiervorgangs ausgehend von einer Neutralstellung 18 in einer ersten Schaltphase mit einem axial verlagerbaren Synchronisierring 20 sowie in einer zweiten Schaltphase mit einem an den Synchronisierring 20 angrenzenden Kupplungskörper 22 drehfest in Eingriff bringbar ist. Eine Innenverzahnung 24 der Schaltmuffe 16 und eine Außenverzahnung 26 des Synchronisierkörpers 14 greifen ineinander, um mit Vollendung des Synchronisiervorgangs eine Drehung der axialen Welle auf den mit einer korrespondieren Außenverzahnung 28 versehenen Kupplungskörper 22 zu übertragen.
Während der ersten Schaltphase wird der Synchronisierring 20 seitens der Schaltmuffe 16 mittels im Synchronisierkörper 14 axial verschiebbar angeordneter Druckstücke 30 in Richtung des angrenzenden Kupplungskörpers 22 verlagert und so mit dem angrenzenden Kupplungskörper 22 zum Zwecke der Vorsynchronisierung in Reibschluss gebracht. Der Reibschluss wird mittels konischer Reibflächen 32, 34 hergestellt, die an dem Kupplungskörper 22 bzw. dem Synchronisierring 20 ausgebildet sind. Sperrzähne (nicht dargestellt) verhindern ein Weiterbewegen der Schaltmuffe 16, bis die Drehzahldifferenz abgebaut ist. Ist dies der Fall, so kann die Schaltmuffe 16 in der darauffolgenden zweiten Schaltphase unter Ineingriffnahme der am Kupplungskörper 22 vorgesehenen Außenverzahnung 28 weitergeschoben werden. Der Synchronisiervorgang ist damit abgeschlossen.

Die axiale Verschiebung der Schaltmuffe 16 erfolgt mittels einer fremdkraftbetätigten Schaltgabel 36, deren gabelförmiges Ende 38 in eine an der Schaltmuffe 16 umlaufende Betätigungsnut 40 eingreift. Das gabelförmige Ende 38 ist innerhalb der Betätigungsnut 40 mit einem gewissen Schaltspiel 42, 44 gelagert. Dieses liegt typischerweise in der Größenordnung von 1 bis 3 Millimetern. Die Betätigung der Schaltgabel 36 erfolgt mittels eines nicht dargestellten elektrischen, hydraulischen oder pneumatischen Aktuators.

Ferner ist die Schaltmuffe 16 in ihrer Neutralstellung 18 mittels mehrerer in dem Synchronisierkörper 14 angeordneter Rasteinrichtungen 46 derart arretiert, dass zum Verschieben der Schaltmuffe 16 aus der Neutralstellung 18 eine definierte Feststellkraft zu überwinden ist (siehe Fig. 2). Zu diesem Zweck weist jede der Rasteinrichtungen 46 eine Druckfeder 48 sowie eine in der Neutralstellung 18 in eine Ausnehmung 50 der Schaltmuffe 16 eingreifende Rastkugel 52 auf. Die Druckfeder 48 ist in einer nach außen hin geschlitzten Radialbohrung 54 innerhalb des Synchronisierkörpers 14 geführt. Die entlang des Innenumfangs der Schaltmuffe 16 ausgebildete Ausnehmung 50 weist eine konische oder zylindrische Form auf.

Auf diese Weise wird die Schaltmuffe 16 in ihrer Neutralstellung 18 unabhängig von einem zwischen dem gabelförmigen Ende 38 der Schaltgabel 36 und der Betätigungsnut 40 der Schaltmuffe 16 bestehenden Schaltspiel 42, 44 verlässlich zentriert, sodass eine durch äußere Krafteinflüsse bedingte Auslenkung der Schaltmuffe 16 wie auch ein damit einhergehender unerwünschter Kontakt der konischen Reibflächen 32, 34 von Synchronisierring 20 und Kupplungskörper 22 sicher unterbunden wird.

Beispielsgemäß sind entlang des Umfangs des Synchronisierkörpers 14 insgesamt drei Rasteinrichtungen 46 und drei Druckstücke 30 abwechselnd mit einem gleichmäßigen Winkelabstand von 60 Grad verteilt angeordnet.

Wie sich insbesondere der Darstellung in Fig. 2 entnehmen lässt, sind die Druckstücke 30 über weitere Rasteinrichtungen 56 mit der Schaltmuffe 16 gekuppelt. Jede der weiteren Rasteinrichtungen 56 umfasst eine Druckfeder 58 sowie eine in eine Ausnehmung 60 der Schaltmuffe 16 eingreifende Rastkugel 62. Die weiteren Rasteinrichtungen 56 übertragen eine an der Schaltmuffe 16 auftretende Verschiebung auf die Druckstücke 30, und zwar derart, dass die Druckstücke 30 der Bewegung der Schaltmuffe 16 bis zum Erreichen eines vorgegebenen Schaltpunkts folgen, jedoch bei Überschreitung des vorgegebenen Schaltpunkts durch Überwindung der Kugelrastung ausgekuppelt werden. Die Druckfedern 58 erstrecken sich hierzu durch in den Druckstücken 30 ausgebildete Radialbohrungen 66, wobei jede der Druckfedern 60 mit einem radial inneren Ende 66 in dem Synchronisierkörper 14 gelagert ist und mit einem radial äußeren Ende 68 an der Rastkugel 62 anliegt und diese gegen die Schaltmuffe 16 bzw. die entlang ihres Innenumfangs ausgebildete Ausnehmung 60 presst. Im Sinne der Verwendbarkeit kostengünstiger bzw. verwechslungssicherer Gleichteile umfassen die Rasteinrichtungen 46 wie auch die weiteren Rasteinrichtungen 56 bezüglich ihrer Dimensionierung übereinstimmende Druckfedern 48, 58 und/oder Rastkugeln 52, 62.

## Patentansprüche

1. Synchronisiereinrichtung, insbesondere für ein Fahrzeuggetriebe, mit einem auf einer axialen Welle drehfest anbringbaren Synchronisierkörper (14) und einer mit dem Synchronisierkörper (14) drehfest verbundenen, entlang eines Außenumfangs des Synchronisierkörpers (14) axial verschiebbaren Schaltmuffe (16), die zur Ausführung eines Synchronisiervorgangs ausgehend von einer Neutralstellung (18) in einer ersten Schaltphase mit einem axial verlagerbaren Synchronisierring (20) sowie in einer zweiten Schaltphase mit einem an den Synchronisierring (20) angrenzenden Kupplungskörper (22) drehfest in Eingriff bringbar ist, wobei der Synchronisierring (20) während der ersten Schaltphase seitens der Schaltmuffe (16) mittels im Synchronisierkörper (14) axial verschiebbar angeordneter Druckstücke (30) in Richtung des angrenzenden Kupplungskörpers (22) verlagerbar und damit zum Zwecke der Vorsynchronisierung mit dem angrenzenden Kupplungskörper (22) in Reibschluss bringbar ist, **dadurch gekennzeichnet dass** die Schaltmuffe (16) mittels einer in dem Synchronisierkörper (14) angeordneten Rasteinrichtung (46) derart arretiert ist, dass zum Verschieben der Schaltmuffe (16) aus der Neutralstellung (18) eine definierte Feststellkraft zu überwinden ist.

2. Synchronisiereinrichtung nach Anspruch 1, **dadurch gekennzeichnet, dass** die Rasteinrichtung (46) eine Druckfeder (48) sowie eine in der Neutralstellung (18) in eine Ausnehmung (50) der Schaltmuffe (16) eingreifende Rastkugel (52) aufweist, wobei die Druckfeder (48) in einer nach außen hin geschlitzten Radialbohrung (54) innerhalb des Synchronisierkörpers (14) geführt ist.

3. Synchronisiereinrichtung nach Anspruch 1 oder 2, **dadurch gekennzeichnet, dass** entlang des Umfangs des Synchronisierkörpers (14) insgesamt drei Rasteinrichtungen (46) und drei Druckstücke (30) abwechselnd mit einem Winkelabstand von 60 Grad verteilt angeordnet sind.

4. Synchronisiereinrichtung nach wenigstens einem der Ansprüche 1 bis 3, **dadurch gekennzeichnet, dass** die Druckstücke (30) über weitere Rasteinrichtungen (56) mit der Schaltmuffe (16) gekuppelt sind.

5. Synchronisiereinrichtung nach Anspruch 4, **dadurch gekennzeichnet, dass** die Rasteinrichtungen (46) wie auch die weiteren Rasteinrichtungen (56) bezüglich ihrer Dimensionierung übereinstimmende Druckfedern (48, 58) und/oder Rastkugeln (52, 62) umfassen.
